(19) Europäisches Patentamt / European Patent Office / Office européen des brevets

(11) **EP 1 372 085 B1**

(12) **EUROPEAN PATENT SPECIFICATION**

(45) Date of publication and mention
of the grant of the patent:
**18.04.2007 Bulletin 2007/16**

(51) Int Cl.:
**G06F 17/14** (2006.01)

(21) Application number: **03100197.7**

(22) Date of filing: **30.01.2003**

(54) **Method for performing fast fourier transform and inverse fast fourier transform**

Verfahren zur Ausführung einer schnellen Fourier-Transformation und einer schnellen Invers-Fourier-Transformation

Méthode pour effectuer une transformation rapide de Fourier et une transformation rapide de Fourier inverse

(84) Designated Contracting States:
**DE FR GB**

(30) Priority: **31.01.2002 GB 2021921**

(43) Date of publication of application:
**17.12.2003 Bulletin 2003/51**

(73) Proprietor: **1021 Technologies KK
Yokohama City 232-0067 (JP)**

(72) Inventor: **Jin, Qu, Gary
K2L 2W3, Kanata (CA)**

(74) Representative: **Harding, Richard Patrick et al
Marks & Clerk,
4220 Nash Court
Oxford Business Park South
Oxford OX4 2RU (GB)**

(56) References cited:
EP-A- 0 710 915          US-A- 5 365 469
US-A- 5 912 829

- CHEN J ET AL: "An efficient FFT algorithm for real-symmetric data" DIGITAL SIGNAL PROCESSING 2, ESTIMATION, VLSI. SAN FRANCISCO, MAR. 23, vol. VOL. 5 CONF. 17, 23 March 1992 (1992-03-23), pages 17-20, XP010059305 ISBN: 0-7803-0532-9
- SORENSEN H V ET AL: "REAL-VALUED FAST FOURIER TRANSFORM ALGORITHMS" IEEE TRANSACTIONS ON ACOUSTICS, SPEECH AND SIGNAL PROCESSING, IEEE INC. NEW YORK, US, vol. ASSP-35, no. 6, 1 June 1987 (1987-06-01), pages 849-863, XP000610391 ISSN: 0096-3518
- GUO H ET AL: "THE QUICK FOURIER TRANSFORM: AN FFT BASED ON SYMMETRIES" IEEE TRANSACTIONS ON SIGNAL PROCESSING, IEEE, INC. NEW YORK, US, vol. 46, no. 2, 1 February 1998 (1998-02-01), pages 335-341, XP000766534 ISSN: 1053-587X

**Description**

**Background of the Invention**

1. Field of the Invention

This invention relates to the field of signal processing, and in particular to a method for implementing a Fast Fourier Transform (FFT) or Inverse Fast Fourier Transform (IFFT) on a digital signal consisting of a sequence of samples.

2. Background of the Invention

In discrete multitone (DMT), Frequency Division Multiplex (FDM) or Frequency Division Duplex (FDD) systems, IFFT is often used to transfer frequency domain modulated signal into a time domain signal. At the receiver, FFT is used to recover the original frequency signal. For a large channel bandwidth with a large number of subchannels, such as occur in a VDSL application, the FFT size will be very large. There are several drawbacks that make DMT almost impracticable. A first problem is that the FFT size will require a very large chip design; a second is that its execution will take longer time; and a third is that it consumes a lot of power.

**Summary of the Invention**

The invention reduces the computation requirement for FFT operations by using the property of real signals. In most applications the input signal is real in the time domain with its frequency component being symmetrical around its DC component. By using this property, the FFT complexity and required operations can be reduced. If the signal has a much smaller bandwidth than the sampling frequency, the number of FFT computations can be further reduced.

According to the present invention there is provided a method of performing an Inverse Fast Fourier Transform operation on a signal that is symmetrical in the frequency domain and for which the following relationship holds:

$$x(n) = \sum_{k=0}^{N} X(k)W_N^k = 2\,\mathrm{Re}\left\{\sum_{k=0}^{\frac{N}{2}-1} X_1(k)W_N^k\right\} \qquad (2)$$

wherein $X_1(0) = (1/2)X(k)$, and $X_1(k)=X(k)$ for $0<k<N/2$, comprising performing a series of butterfly operations using only input samples $X(k)$, where $k < N/2$, to derive the inverse transform $x(n)$ of the signal.

The invention also provides a method of performing a Fast Fourier Transform operation on a signal that is symmetrical in the frequency domain and for which the following relationship holds:

$$x(n) = \sum_{k=0}^{N} X(k)W_N^k = 2\,\mathrm{Re}\left\{\sum_{k=0}^{\frac{N}{2}-1} X_1(k)W_N^k\right\} \qquad (2)$$

wherein $X_1(0) = (1/2)X(k)$, and $X_1(k)=X(k)$ for $0<k<N/2$, and wherein the signal only occupies the low half of the Nyquist bandwidth, comprising performing a series of butterfly operations using the input samples in the time domain $x(n)$ to produce pair of output samples $X(p)$ and $X(q)$ in the frequency domain, where $p$ and $q < N/2$, and deriving inverse transform $X(k)$ from said output samples $X(p)$ and $X(q)$.

The novel method of the invention can reduce the number of butterfly operations in both FFT and IFFT operations so long as the signal is real in the time domain. The Nyquist frequency should be equal to N/2, where N is the number of samples. This is most often true in telecommunications applications. Further reductions in the number of butterfly operations can be made when the signal occupies a bandwidth that is smaller than Nyquist bandwidth, and when the effective bandwidth of the signal is less than the Nyquist bandwidth.

**Brief Description of the Drawings**

The invention will now be described in more detail, by way of example only, with reference to the accompanying drawings, in which:-

Fig. 1 shows a decimation-in-time FFT algorithm (N=8);

Fig. 2 shows a decimation-in-frequency FFT algorithm (N=8);

Fig.3 shows basic butterfly computations;

Fig. 4 shows a decimation-in-time FFT algorithm (N=8);

Fig. 5 shows a simplified decimation-in-time FFT algorithm (N=8);

Fig. 6 shows a simplified decimation-in-time FFT algorithm (N=8);

Fig. 7 shows a simplified decimation-in-time FFT algorithm (N=8) for a band limited signal;

Fig. 8 shows a simplified decimation-in-frequency FFT algorithm (N=8);

Fig. 9 shows a simplified Decimation-in-frequency FFT algorithm (N=8) for a band limited signal; and

Figure 10 is a block diagram illustrating how an input signal in the time domain can be broken up into two equal parts.

**Detailed Description of the Preferred Embodiments**

It is known that if a time domain signal $x(n)$ consists of $N$ samples, the frequency response X(k) can be calculated by using the discrete Fourier transform

$$X(k) = \frac{1}{N}\sum_{n=0}^{N-1} x(n)W_N^{Nk} \text{, } \textbf{where } k=0, 1, 2, \ldots N\text{-}1.$$

In performing a Fast Fourier Transform, the signal is broken down into equal parts made up of odd and even samples. This process is shown in Figure 10. The first block 10 performs a discrete Fourier transform operation on the even samples, and the second block 12 performs a similar operation on the odd samples. The results are then combined in block 14, which performs an N point recombination operation.

The recombination process is used to combine the samples into the correct order. This is carried out using butterfly network in a manner known *per se.*

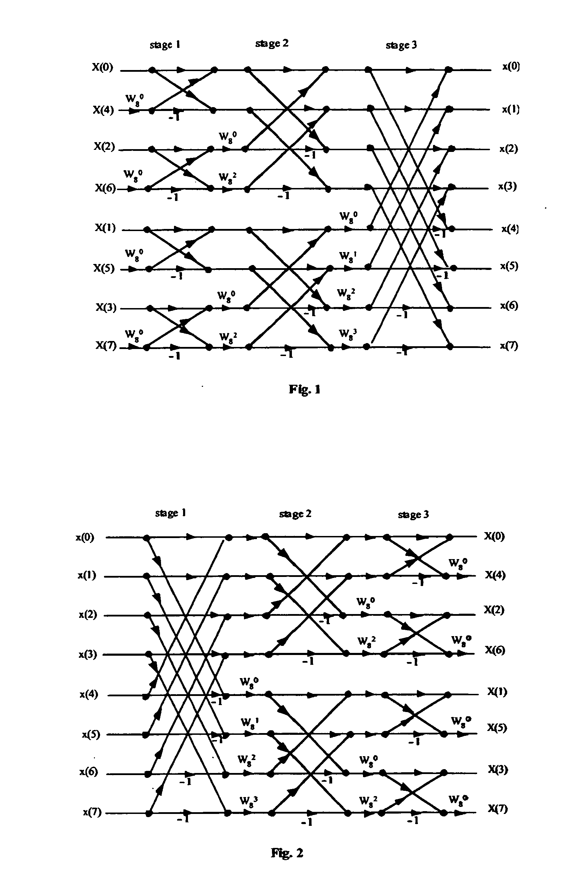

In performing FFT operations on a digital signal $x(n)$ consisting of a sequence of samples, radix-2 algorithms are commonly used. See JG.Proakis and D.G.Manolakis, "Digital Signal Processing", Prentice-Hall, 1996, the contents of which are herein incorporated by reference. A radix-2 algorithm is an FFT/IFFT algorithm, where the basic component is a butterfly with two inputs and two outputs. These algorithms are either decimation-in-time (see Fig.1) or decimation-in-frequency (see Fig.2) algorithms.

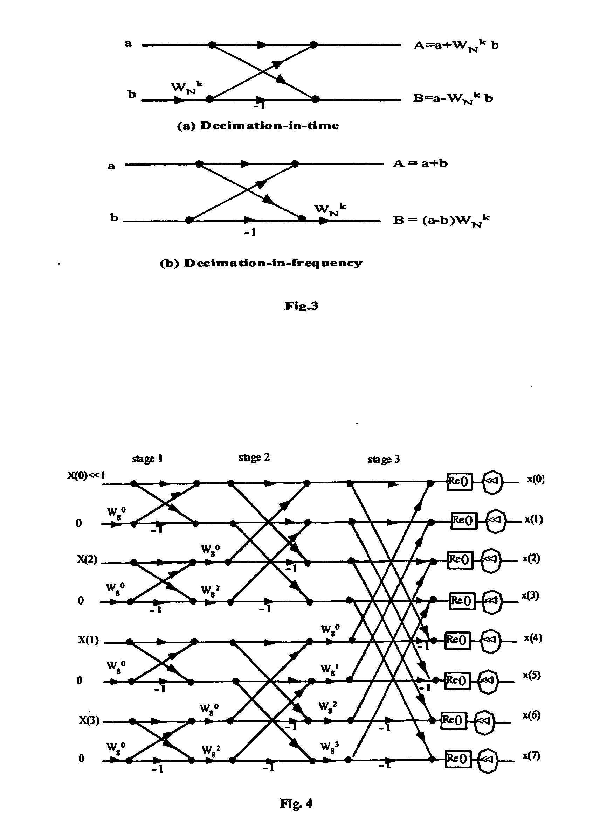

In Fig.1, IFFT is used as an example with input in bit reverse order and output in natural order; while in Fig.2, FFT is used as an example with input in natural order and output in bit reverse order. In both algorithms, the basic operation blocks are butterfly operations, which are shown in Fig.3 for decimation-in-time and decimation-in-frequency respectively (where $W_N^k =$. For an N point FFT (N=$2^k$), a total of (N/2)$\log_2$N butterfly operations are required.

For most applications, the time domain signal ($x(n)$) is real and its frequency domain signal ($X(k)$) is symmetrical, i.e., if $X(k)$ is the FFT of a real signal $x(n)$, it satisfies

$$X(k) = X^*(N-k), \quad \text{for } k=1, \ldots, N/2\text{-}1 \qquad (1)$$

where $N$ is the length of the FFT and * represents the complex conjugate. Based on the property of Eq.(1), the required number of butterfly operations in the radix-2 FFT algorithm can be reduced by taking advantage of this symmetry. If the Nyquist frequency is N/2, a common case, a further reduction in the number of required butterfly operations can be achieved. If the signal has a limited bandwidth, which is much smaller than half of sampling frequency, a still further reduction in the computational requirements can be achieved.

In the novel scheme, a radix-2 decimation-in-time FFT algorithm is used as a basis for an IFFT operation. The input sequence $X(k)$ is arranged in bit-reversed order as shown in Fig.1.

Let $k$=0, 1, ..., $N$-1 and the number of bits in $k$ be defined as $nb$, i.e., $nb=\log_2 N$. The Most-Significant-Bit (MSB) of $k$ is bit $nb$. Then after bit reversal, the input sequence is arranged as: MSB($k$)=0, MSB($k$)=1, MSB($k$)=0, MSB($k$)=1, .... Taking Fig.1 as an example, where N=8 and nb=3, the input sequence is

| Xinput sequence: | 0=0x000 | 4=0x100 | 2=0x010 | 6=0x110 | 1=0x001 | 5=0x101 | 3=0x011 | 7=0x111 |
|---|---|---|---|---|---|---|---|---|
| MSB of index (the third bit) | 0 | 1 | 0 | 1 | 0 | 1 | 0 | 1 |

From this example, it will be apparent that, after bit reversal, the even location (starting from 0) corresponds to $X(k)$ with $k<N/2$ and the odd location corresponds to $X(k)$ with $k \geq N/2$.

Due to the property shown in Eq.(1), for the real time domain signal with Nyquist component as 0 ($X(N/2)=0$), it follows that

$$x(n) = \sum_{k=0}^{N} X(k) W_N^k = 2\operatorname{Re}\left\{ \sum_{k=0}^{\frac{N}{2}-1} X_1(k) W_N^k \right\} \qquad (2)$$

where $X_1(0) = (1/2)X(k)$, and $X_1(k)=X(k)$ for $0<k<N/2$ and where x(n) is the input time domain signal and X(k) is the frequency domain signal. Using Eq.(2) and setting $X(k)=0$ for $k \geq N/2$, Fig.1 can be redrawn as shown in Figure 4.

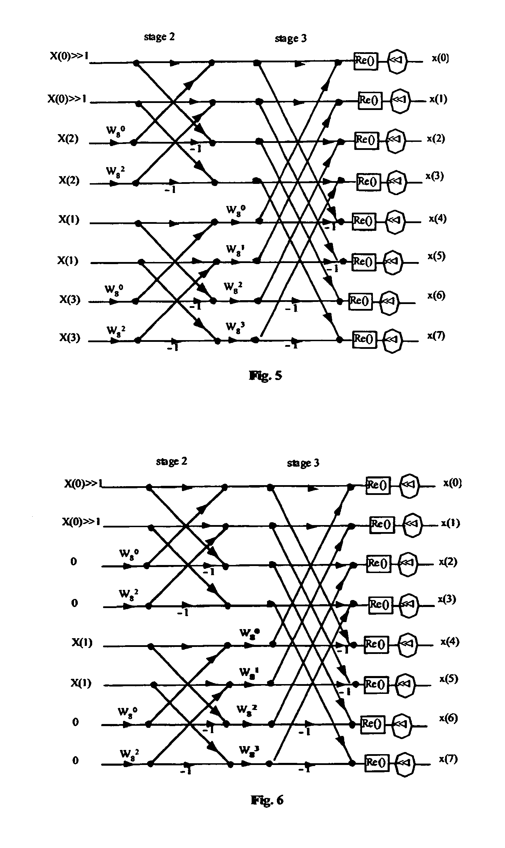

Figures 3(a) and 3(b) show basic butterfly operations for decimation in time and decimation in frequency respectively. Using the relationship shown in Fig.3(a), when $b$=0, it follows that A=B=a. The process shown in Fig.4 can be further simplified as shown in Fig.5. This process has one stage less than the process shown in Fig.1. The total required number of butterfly operations is reduced from $(N/2)\log_2 N$ to $(N/2)(\log_2 N - 1)$. This represents a 33% saving for the situation where N=8.

If the signal only occupies the low half of the Nyquist bandwidth, i.e., $X(k)=0$, for $k=N/4$, $N/4$ +1, ..., $N/2-1$, further computational saving can be achieved for IFFT operation. On examining the bit reverse index in Figs.1 and 4, for all even locations, it will be noted that every second location corresponds to a location $X(k)=0$ with k>N/4-1 or in another words the bit nb-1 of sample $k$ is 1 (nb is defined as the number of bits in $k$). Again, taking Fig.1 as an example, where N=8 and nb=3, the input sequence becomes:

| X input sequence: | 0=0x000 | 4=0x100 | 2=0x010 | 6=0x110 | 1=0x001 | 5=0x101 | 3=0x011 | 7=0x111 |
|---|---|---|---|---|---|---|---|---|
| MSB of index (the third bit) | 0 | 1 | 0 | 1 | 0 | 1 | 0 | 1 |
| 2nd MSB | 0 | | 1 | | 0 | | 1 | |

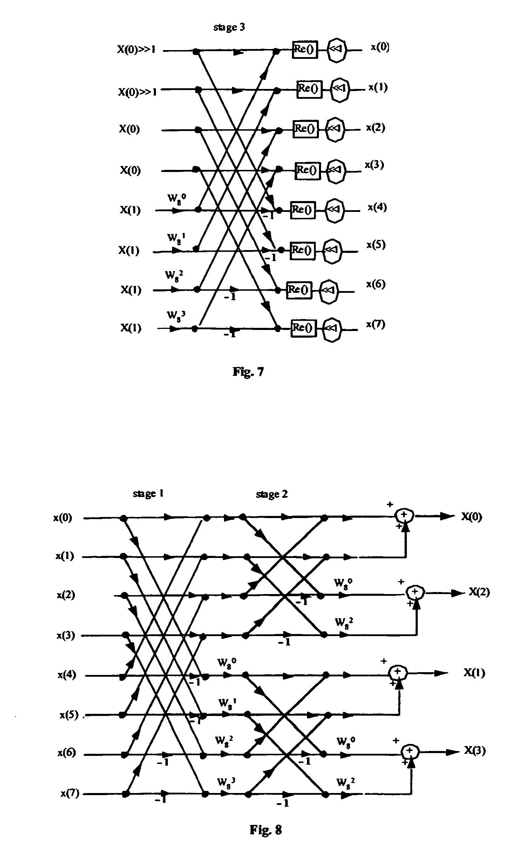

Only the 2nd MSB is of interest when MSB is 0. In general, apart from the fact that the odd location of input sequence is 0 after bit-reverse operation, the input sequence is also 0 at location 2,6,10 ... With Fig.1 as an example, Fig.5 can be simplified as shown in Fig.6. It can be further simplified as shown in Fig.7.

In general, only $\log_2 N-2$ stages of butterfly operations are required. Therefore, the number of required butterfly operations is reduced from $(N/2)\log_2 N$ for an N-point FFT to $(N/2)(\log_2 N - 2)$. This represents a 66% computational reduction for the situation where N=8.

In more general terms, if the signal only occupies 1/M of Nyquist frequency with M=$2^m$, the required number of butterfly operations is $(N/2)(\log_2(N/M)-1)$.

In a practical implementation the input sequence is first bit-reversed with the DC value being reduced 2 times, and then the value at location $m_1M+1$ to $(m_1+1)M-1$ is made to repeat the data at location $m_1M$. The first $\log_2 M+1$ stage operations in the decimation-in-time FFT algorithm are bypassed and the modified input sequence goes directly to stage $\log_2 M+2$. Only real values after FFT operation are outputted after being increased by 2 times.

If the signal occupies a bandwidth B, which is 1/M of Nyquist bandwidth, but the signal is not low-pass signal, i.e.,

$$X(k) = 0 \qquad \text{for} \quad k = 0, 1, ..., M_1 - 1, M_1 + B, M_1 + \dot{B} + 1, ..., \frac{N}{2}$$

The following steps should be followed to reduce FFT computations:

1. Set $X(k)=0$ for $k>(N/2-1)$.

2. Shift $X(k)$ in frequency by $M_1$ to get a new sequence $X_1(k)$, i.e.,

$$X_1(k) = \begin{cases} X(k + M_1), & \text{for } k=0, ..., B-1. \\ 0, & \text{otherwise.} \end{cases}$$

3. Apply IFFT butterfly operation as shown in Fig.7 and skip the first $\log_2 M+1$ stages that would be carried out in a normal radix-2 FFT.

4. Because the frequency shift by $M_1$ is equivalent to multiplication of $e^{-j\frac{2\pi n}{N}M_1}$ by the time domain samples $x_1$ (n), the final output is:

$$x(n) = 2\text{Re}\left\{x_1(n) \, e^{-j\frac{2\pi n}{N}M_1}\right\}$$

$$= \left[\text{Re}(x_1(n))\cos\left(\frac{2\pi n}{N}M_1\right) + \text{Im}(x_1(n))\sin\left(\frac{2\pi n}{N}M_1\right)\right] \ll 1$$

Comparing this relationship with the low pass signal, it will be apparent that the above equation is equivalent to extra 2N real number multiplication and N real number additions. And it is also equivalent to N/2 complex number multiplications. These are extra computational requirements in comparison with the processing of a low pass signal.

The FFT operation is the same as IFFT with a similar amount of computation reduction. The basic algorithm is a radix-2, decimation-in-frequency FFT.

Fig.2 shows an example with N=8. For the real input time sequence, the output frequency signal is symmetrical as shown in Eq.(1), which means that it is not required to calculate the second butterfly output (B) at the last stage of FFT operation. Compared with the IFFT operation, extra N/2 complex addition is required but N/2 complex number multiplication is eliminated in comparison with the original FFT algorithm. The final FFT algorithm is shown in Fig.8 with virtually the same amount of computation saving as for IFFT operation.

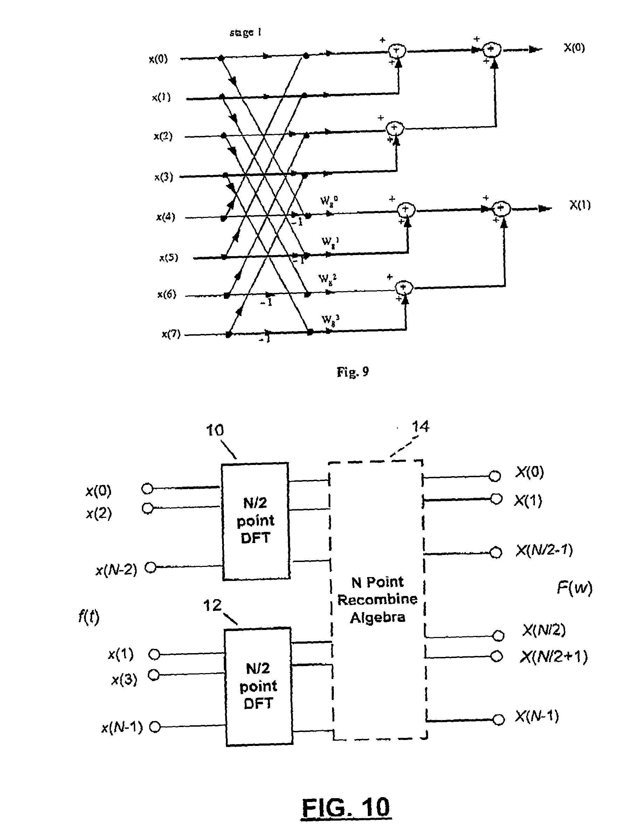

If the signal only occupies the low half of the Nyquist bandwidth, i.e., X(k)=0, for k=N/4, N/4 +1, ..., N/2-1, further computation saving can be achieved for FFT operation as shown in the IFFT operation. From the previous analysis and Fig.8, it follows that one of the outputs (lower part B) in the second but last stage butterfly operation is 0 or uninteresting. This means that extra N/2 complex number multiplication is unnecessary. This implementation is shown in Fig.9. Once again, another extra N/2 complex number addition is needed in comparison with IFFT operation shown in Fig.7.

In general, if the signal only occupies 1/M of Nyquist bandwidth with $M=2^m$, the required number of butterfly operation is $(N/2)(\log_2(N/M)-1)$. The last m+1 stage butterfly operations in the decimation-in-frequency algorithm can be replaced with addition operations. More precisely, Every M outputs at stage $\log_2(N/M)-1$ are added up to give a single output.

If the signal occupies a bandwidth B which is 1/M of Nyquist bandwidth, but the signal is not a low-pass signal, i.e.,

$$X(k) = 0 \qquad \text{for } k = 0, 1, ..., M_1 - 1, M_1 + B, M_1 + B + 1, ..., \frac{N}{2}$$

because the frequency shift by $M_1$ is equivalent to multiplication of to the time domain samples x(n), we have the input sequence $x_1(n)$

$$x_1(n) = x(n) e^{-j\frac{2\pi n}{N}M_1}$$
$$= x(n)\cos\left(\frac{2\pi n}{N}M_1\right) - jx(n)\sin\left(\frac{2\pi n}{N}M_1\right)$$

where the property that x(n) is a real signal is used. Hence the above equation is equivalent to N/2 complex number multiplication. Then the algorithm in Fig.9 is applied to $x_1(n)$ with the output k=0, 1, ..., B corresponds to frequency location $M_1$, $M_1+1$, ..., $M_1+B-1$ respectively.

The invention is particularly suitable for implementation on a VDSL chip. It will be apparent that the IFFT or FFT structure can reduce the number of butterfly operations, especially when the signal occupies a bandwidth which is smaller than Nyquist bandwidth, or when the signal is not low-pass but its effective bandwidth is smaller than Nyquist bandwidth.

**Claims**

1. A computer based method of performing an Inverse Fast Fourier Transform operation on a digital physical signal consisting of a sequence of samples whereby said signal is symmetrical in the frequency domain and for which the following relationship holds:

$$x(n) = \sum_{k=0}^{N} X(k)W_N^k = 2\text{Re}\left\{\sum_{k=0}^{\frac{N}{2}-1} X_1(k)W_N^k\right\} \qquad (2)$$

wherein $X_1(0)= (1/2)X(k)$, and $X_1(k)=X(k)$ for $0<k<N/2$, comprising performing a series of butterfly operations using only input samples $X(k)$, where $k< N/2$, to derive the inverse transform $x(n)$ of the signal.

2. A method as claimed in claim 1, wherein inputs to said butterfly operations corresponding to samples $X(k)$, where $k \geq N/2$ are set equal to zero.

3. A method as claimed in claim 2, wherein $N = 8$ and said input samples are arranged in order $X(0)$, 0, $X(2)$, $X(0)$, $X(1)$, 0, $X(3)$, 0.

4. A method as claimed in claim 3 having three stages performing said butterfly operations.

5. A method as claimed in claim 1 having two stages performing said butterfly operations.

6. A method as claimed in claim 5, wherein inputs to said butterfly operations are repeated.

7. A method as claimed in claim 6, wherein $N= 8$ and said input samples are arranged in order $X(0)$, $X(0)$, $X(2)$, $X(2)$, $X(1)$, $X(1)$, $X(3)$, $X(3)$.

**8.** A method as claimed in claim 6, wherein said signal only occupies the low half of the Nyquist bandwidth and some of said input samples are set equal to zero.

**9.** A method as claimed in claim 8, wherein $N = 8$ and said input samples are arranged in order $X(0)$, $X(0)$, 0, 0, $X(1)$, $X(1)$, 0, 0.

**10.** A method as claimed in claim 1, having one stage, and wherein only two samples are used as inputs to said butterfly operations to derive the output samples x(n).

**11.** A method as claimed in claim 10, wherein $N = 8$ and said input samples are arranged in order $X(0)$, $X(0)$, $X(0)$, $X(0)$, $X(1)$, $X(1)$, $X(1)$, $X(1)$.

**12.** A computer based method of performing a Fast Fourier Transform operation on a digital physical signal consisting of a sequence of samples whereby said signal is symmetrical in the frequency domain and for which the following relationship holds:

$$x(n) = \sum_{k=0}^{N} X(k) W_N^k = 2 \operatorname{Re} \left\{ \sum_{k=0}^{\frac{N}{2}-1} X_1(k) W_N^k \right\} \qquad (2)$$

wherein $X_1(0) = (1/2), X(k)$, and $X_1(k) = X(k)$ for $0 < k < N/2$, and wherein the signal only occupies the low half of the Nyquist bandwidth, comprising performing a series of butterfly operations using the input samples in the time domain $x(n)$ to produce pair of output samples $X(p)$ and $X(q)$ in the frequency domain, where $p$ and $q < N/2$, and deriving inverse transform $X(k)$ from said output samples $X(p)$ and $X(g)$.

**13.** A method as claimed in claim 12, wherein $X(p)$ and $X(q)$ are $X(0)$ and $X(1)$.

**Patentansprüche**

**1.** Computerbasiertes Verfahren zum Ausführen einer inversen schnellen Fourier-Transformations-Operation auf ein aus einer Folge von Abtastwerten bestehendes digitales physikalisches Signal, wobei das Signal im Frequenzbereich symmetrisch ist und für das die folgende Beziehung gilt:

$$x(n) = \sum_{k=0}^{N} X(k) W_N^k = 2 \operatorname{Re} \left\{ \sum_{k=0}^{\frac{N}{2}-1} X_1(k) W_N^k \right\} \qquad (2)$$

wobei $X_1(0) = (1/2) X(k)$ und $X_1(k) = X(k)$ für $0 < k < N/2$, das Verfahren umfasst das Ausführen einer Folge von Butterfly-Operationen, die nur die Eingangsabtastwerte $X(k)$ mit $k < N/2$ verwenden, um die inverse Transformierte $x(n)$ des Signals zu erhalten.

**2.** Verfahren nach Anspruch 1, wobei Eingänge für die Butterfly-Operationen, die den Abtastwerten $X(k)$ entsprechen, bei denen $k \geq N/2$, gleich Null gesetzt werden.

**3.** Verfahren nach Anspruch 2, wobei $N = 8$ und die Eingangsabtastwerte in der Reihenfolge $X(0)$, 0, $X(2)$, $X(0)$, $X(1)$, 0, $X(3)$, 0 angeordnet werden.

**4.** Verfahren nach Anspruch 3 mit drei Stufen zum Ausführen der Butterfly-Operationen hat.

**5.** Verfahren nach Anspruch 1 mit zwei Stufen zum Ausführen der Butterfly-Operationen hat.

**6.** Verfahren nach Anspruch 5, wobei Eingänge für die Butterfly-Operationen wiederholt werden.

**7.** Verfahren nach Anspruch 6, wobei $N$ = 8 und die Eingangsabtastwerte in der Reihenfolge $X$(0), $X$(0), $X$(2), $X$(2), $X$(1), $X$(1), $X$(3), X(3) angeordnet werden.

**8.** Verfahren nach Anspruch 6, wobei das Signal nur die untere Hälfte der Nyquist-Bandbreite belegt und einige der Eingangsabtastwerte zu Null gesetzt werden.

**9.** Verfahren nach Anspruch 8, wobei $N$ = 8 und die Eingangsabtastwerte in der Reihenfolge $X$(0), $X$(0), 0, 0, $X$(1), $X$(1), 0, 0 angeordnet werden.

**10.** Verfahren nach Anspruch 1 mit einer Stufe, wobei nur zwei Abtastwerte als Eingänge für die Butterfly-Operationen verwendet werden, um die Ausgangsabtastwerte $x(n)$ zu erhalten.

**11.** Verfahren nach Anspruch 10, wobei N = 8 und die Eingangsabtastwerte in der Reihenfolge $X$(0), $X$(0), $X$(0), $X$(0), $X$(1), $X$(1), X(1), $X$(1) angeordnet werden.

**12.** Computerbasiertes Verfahren zum Ausführen einer schnellen Fourier-Transformations-Operation auf ein aus einer Folge von Abtastwerten bestehendes digitales physikalisches Signal, wobei das Signal im Frequenzbereich symmetrisch ist und für das die folgende Beziehung gilt:

$$x(n) = \sum_{k=0}^{N} X(k)W_N^k = 2\,\mathrm{Re}\left\{\sum_{k=0}^{\frac{N}{2}-1} X_1(k)W_N^k\right\} \qquad (2)$$

wobei $X_1(0) = (1/2)\,X(k)$ und $X_1(k) = X(k)$ für $0 < k < N/2$, wobei das Signal nur die untere Hälfte der Nyquist-Bandbreite belegt, das Verfahren umfasst das Ausführen einer Folge von Butterfly-Operationen, die die Eingangsabtastwerte im Zeitbereich $x(n)$ verwenden, um Paare von Ausgangsabtastwerten $X(p)$ und $X(q)$ mit $p$ und $q < N/2$ im Frequenzbereich zu erzeugen, und um die inverse Transformierte $X(k)$ aus diesen Ausgangsabtastwerten $X(p)$ und $X(q)$ zu erhalten.

**13.** Verfahren nach Anspruch 12, wobei $X(p)$ und $X(q)$ $X$(0) und $X$(1) sind.

**Revendications**

**1.** Méthode basée sur ordinateur pour effectuer une opération de transformation de Fourier rapide inverse sur un signal physique numérique comprenant une séquence d'échantillons moyennant quoi ledit signal est symétrique dans le domaine de fréquence et pour lequel la relation suivante est valable :

$$x(n) = \sum_{k=0}^{N} X(k)W_N^k = 2\,\mathrm{Re}\left\{\sum_{k=0}^{\frac{N}{2}-1} X_1(k)W_N^k\right\} \qquad (2)$$

où $X_1(0) = (1/2)X(k)$ et $X_1(k) = X(k)$ pour $0<k<N/2$, comprenant d'effectuer une série d'opérations papillon en utilisant seulement des échantillons d'entrée X(k), où k < N/2, pour dériver la transformée inverse x(n) du signal.

**2.** Méthode selon la revendication 1, dans laquelle les entrées pour lesdites opérations papillon correspondant à des échantillons d'entrée X(k), où k ≥ N/2, sont fixées égales à zéro.

**3.** Méthode selon la revendication 2, dans laquelle N = 8 et lesdits échantillons d'entrée sont agencés dams l'ordre X(0) , 0, X(2) , X(0) , X(1) , 0, X(3) , 0.

**4.** Méthode selon la revendication 3, ayant trois étages effectuant lesdites opérations papillon.

**5.** Méthode selon la revendication 1 ayant deux étages effectuant lesdites opérations papillon.

**6.** Méthode selon la revendication 5, dans laquelle les entrées pour lesdites opérations papillon sont répétées.

**7.** Méthode selon la revendication 6, dans laquelle N = 8 et lesdits échantillons d'entrée sont agencés dams l'ordre X(0) , X(0) , X (2), X (2), X(1) , X(1) , X(3) , X(3).

**8.** Méthode selon la revendication 6, dans laquelle ledit signal occupe seulement la moitié inférieure de la largeur de bande de Nyquist et certains desdits échantillons d'entrée sont fixés égaux à zéro.

**9.** Méthode selon la revendication 8, dans laquelle N = 8 et lesdits échantillons d'entrée sont agencés dams l'ordre $X(0)$, $X(0)$, 0, 0, $X(1)$, $X(1)$, 0, 0.

**10.** Méthode selon la revendication 1, ayant un étage, et dans laquelle seulement deux échantillons sont utilisés comme entrées pour lesdites opérations papillon pour dériver les échantillons de sortie x(n).

**11.** Méthode selon la revendication 10, dans laquelle N = 8 et lesdits échantillons d'entrée sont agencés dams l'ordre X(0), X(0), X(0), X(0), X(1), X(1), X(1), X(1).

**12.** Méthode basée sur ordinateur pour effectuer une opération de transformation de Fourier rapide inverse sur un signal physique numérique comprenant une séquence d'échantillons moyennant quoi ledit signal est symétrique dans le domaine de fréquence et pour lequel la relation suivante est valable :

$$x(n) = \sum_{k=0}^{N} X(k) W_N^k = 2 \operatorname{Re} \left\{ \sum_{k=0}^{\frac{N}{2}-1} X_1(k) W_N^k \right\} \qquad (2)$$

où $X_1(0) = (1/2)X(k)$ et $X_1(k) = X(k)$ pour 0<k<N/2, et dans laquelle le signal occupe seulement la moitié inférieure de la largeur de bande de Nyquist, comprenant d'effectuer une série d'opérations papillon en utilisant les échantillons d'entrée dans le domaine temporel x(n) pour produire une paire d'échantillons de sortie X(p) et X(q) dans le domaine de fréquence, où p et q < N/2, et en dérivant la transformée inverse X(k) à partir desdits échantillons de sortie X(p) et X(q).

**13.** Méthode selon la revendication 12, dans laquelle X(p) et X(q) sont X(0) et X(1).

Fig. 1

Fig. 2

**(a) Decimation-in-time**

**(b) Decimation-in-frequency**

**Fig.3**

**Fig. 4**

stage 2    stage 3

X(0)>>1

X(0)>>1

X(2)    $W_8^0$

X(2)    $W_8^2$

X(1)

X(1)

X(3)    $W_8^0$

X(3)    $W_8^2$

$W_8^0$    Re()    x(0)

$W_8^1$    Re()    x(1)

$W_8^2$    Re()    x(2)

$W_8^3$    Re()    x(3)

Re()    x(4)

Re()    x(5)

Re()    x(6)

Re()    x(7)

**Fig. 5**

stage 2    stage 3

X(0)>>1

X(0)>>1

0    $W_8^0$

0    $W_8^2$

X(1)

X(1)

0    $W_8^0$

0    $W_8^2$

$W_8^0$    Re()    x(0)

$W_8^1$    Re()    x(1)

$W_8^2$    Re()    x(2)

$W_8^3$    Re()    x(3)

Re()    x(4)

Re()    x(5)

Re()    x(6)

Re()    x(7)

**Fig. 6**

stage 3

X(0)>>1

X(0)>>1

X(0)

X(0)

$W_8^0$   X(1)

$W_8^1$   X(1)

$W_8^2$   X(1)

$W_8^3$   X(1)

Re()   x(0)

Re()   x(1)

Re()   x(2)

Re()   x(3)

Re()   x(4)

Re()   x(5)

Re()   x(6)

Re()   x(7)

**Fig. 7**

stage 1    stage 2

x(0)

x(1)

x(2)

x(3)

x(4)

x(5)

x(6)

x(7)

$W_8^0$

$W_8^1$

$W_8^2$

$W_8^3$

$W_8^0$

$W_8^2$

$W_8^0$

$W_8^2$

X(0)

X(2)

X(1)

X(3)

**Fig. 8**

Fig. 9

FIG. 10